(19) Europäisches Patentamt

European Patent Office

Office européen des brevets

(11) EP 0 717 523 B1

(12) EUROPEAN PATENT SPECIFICATION

(45) Date of publication and mention
of the grant of the patent:
**17.11.2004 Bulletin 2004/47**

(51) Int Cl.⁷: **H04J 14/02**, H04B 10/135

(21) Application number: **95308840.8**

(22) Date of filing: **06.12.1995**

(54) **Dynamically controlled polarization modulation in wavelength division multiplexed transmission systems**

Dynamisch kontrollierte Polarisationsmodulation in Wellenlängenmultiplex-Übertragungssystemen

Contrôle dynamique de modulation de polarisation pour systèmes de transmission de multiplexage des ondes

(84) Designated Contracting States:
**DE FR GB IT NL SE**

(30) Priority: **14.12.1994 US 355788**

(43) Date of publication of application:
**19.06.1996 Bulletin 1996/25**

(73) Proprietor: **Tyco Telecommunications (US) Inc.
Morristown, NJ 07960 (US)**

(72) Inventors:
• **Bergano, Neal S.
Lincroft, New Jersey 07738 (US)**
• **Davidson, Carl R.
Warren, NJ 07069 (US)**

(74) Representative: **Weitzel, David Stanley et al
Brookes Batchellor
102-108 Clerkenwell Road
London EC1M 5SA (GB)**

(56) References cited:
**EP-A- 0 387 870**     **DE-A- 3 716 247**
**US-A- 5 327 511**

• **IEEE PHOTONICS TECHNOLOGY LETTERS, vol. 5, no. 3, March 1993, USA, pages 304-306, XP000616830 BERGANO N S ET AL: "MARGIN MEASUREMENTS IN OPTICAL AMPLIFIER SYSTEM"**
• **COMMUNICATIONS - RISING TO THE HEIGHTS, DENVER, JUNE 23 - 26, 1991, vol. 1 OF 3, 23 June 1991, INSTITUTE OF ELECTRICAL AND ELECTRONICS ENGINEERS, pages 343-347, XP000269428 CAPONIO N ET AL: "DEMONSTRATION OF POLARISATION INDEPENDENT COHERENT TRANSMISSION BY SYNCHRONOUS INTRA-BIT POLARISATION SPREADING"**

## Description

Technical Field

This invention relates to the optical transmission of information. More particularly, this invention relates to polarization modulation in wavelength division multiplexed transmission systems.

Background of the Invention

Wavelength-division multiplexing is expected to be increasingly utilized in undersea and transcontinental terrestrial optical transmission systems due, in part, to the large bandwidth capacity such multiplexiing provides. Unfortunately, wavelength division multiplexed transmission systems are susceptible to performance limitations due to polarization dependent effects, such as polarization-dependent hole burning in the erbium-doped fiber amplifiers that are typically used in such transmission systems, and cross-talk between the multiplexed channels. Polarization dependent hole burning is related to the population inversion dynamics of the erbium-doped fiber amplifiers. Crosstalk is primarily caused by the non-linear index of refraction of optical transmission fibers. Four-wave mixing is one significant deleterious effect that produces cross-talk. Compounding the problems associated with multiplexing is the tendency for some system parameters which influence the above-described performance limiting effects to vary with time, due to changes in environmental conditions and other factors. Accordingly, reducing four-wave mixing while simultaneously reducing polarization-dependent hole burning would be desirable in wavelength division multiplexed optical transmission systems. Moreover, it would be particularly desirable to achieve such simultaneous reduction under changing conditions.

The reader is referred to US-A- 5 327 511. This reference teaches a polarization modulator for modulating the state of polarization of an optical signal periodically between first and second states of polarization (SOP) of at least one pair of orthogonal states of polarization. The SOP may be modulated at a rate substantially higher than $1/t_s$, where $t_s$ is the anistropic saturation time of an optical amplifier in the system. The SOP may be modulated so that it traces a complete great circle on the Poincaré sphere. The particular circle being traced on the Poincaré sphere may be selected to maintain a predetermined parameter at a prescribed value. The great circle may be traced at a uniform speed.

Summary of the Invention

Four-wave mixing between multiplexed channels in a wavelength division multiplexed optical transmission system, and the effects of polarization dependent hole burning, are simultaneously reduced, in accordance with the invention, by a method and apparatus which provides for modulating a state-of-polarization of an optical signal, where the optical signal has a plurality optical channels, so that an average value of the state-of-polarization of the optical signal over each modulation cycle is substantially equal to zero; and, orienting states-of-polarization of predetermined optical channels of the optical signal in response to a signal indicative of a predetermined characteristic of the transmission system while maintaining the substantially zero average value of the state-of-polarization of the optical signal over each modulation cycle. Advantageously, this approach provides for a reduction in performance limiting effects under changing conditions.

**Brief Description of the Drawings**

FIG. 1 is a simplified block diagram of an illustrative arrangement of elements facilitating practice of the invention including an optical transmitter; an optical transmission path; a telemetry path; an optical receiver; and, a bit-error rate detector, in accordance with the invention.

FIG. 2 shows the states-of-polarization along a great circle trajectory on the Poincaré sphere for optical channels in the optical transmitter shown in FIG. 1, in accordance with the invention.

FIGs. 3 and 4 schematically show an illustrative example of a dithering technique, in accordance with the invention.

FIG. 5 is a simplified block diagram of a second illustrative arrangement of elements facilitating practice of the invention, in accordance with the invention.

FIG. 6 is a simplified block diagram of a third illustrative arrangement of elements facilitating practice of the invention, in accordance with the invention.

FIG. 7 is a simplified block diagram of a fourth illustrative arrangement of elements facilitating practice of the invention, in accordance with the invention.

FIG. 8 is a simplified block diagram of a fifth illustrative arrangement of elements facilitating practice of the invention, in accordance with the invention.

**Detailed Description**

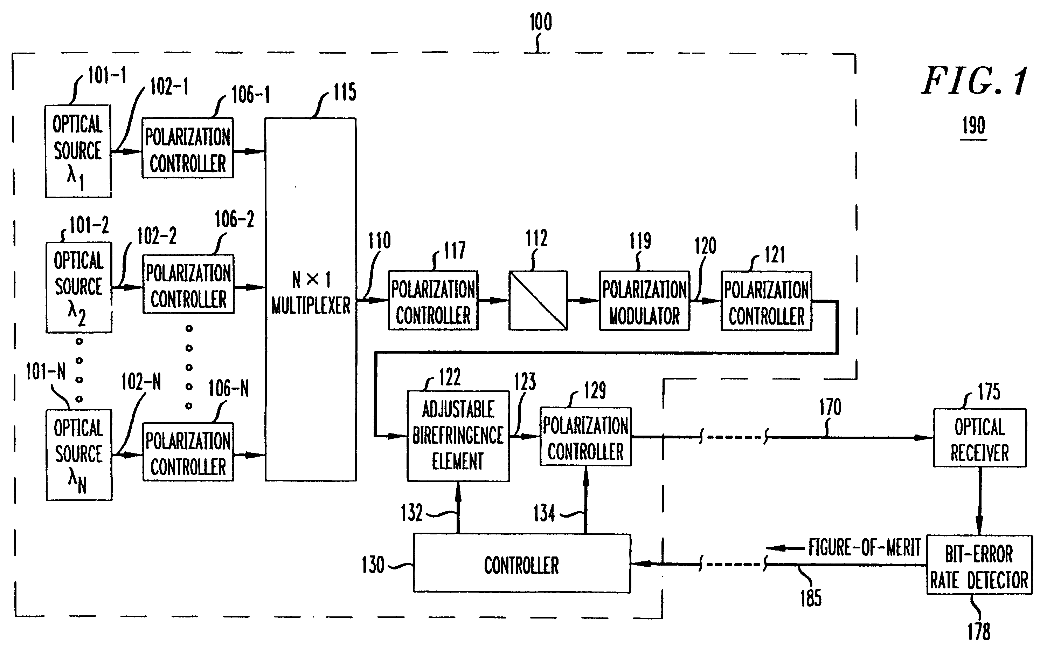

FIG. 1 is a simplified block diagram of an illustrative arrangement of elements facilitating practice of the invention. Shown are optical transmitter 100; optical transmission path 170; optical receiver 175; bit-rate error detector 178; and telemetry path 185. Optical transmitter 100 includes a plurality of optical sources 101 for producing a plurality of optical channels 102; a plurality of polarization controllers 106, 117, 121, and 129; Nx1 multiplexer 115; polarizing filter 112; polarization modulator 119; controller 130; and, adjustable birefringence element 122. It is noted at the onset that the term "channel" as used herein refers to any optical phenomena that is defined by a unique wavelength. Thus, the term channel may refer to a component of a wavelength division multiplexed optical signal having a plurality of components, where each component has a different wavelength. Moreover, as used herein, the term channel may refer to a monochromatic optical signal. The elements listed above forming optical transmitter 100 may be coupled using conventional means including, for example, optical fibers, which could include polarization maintaining optical fibers where appropriate. Optical transmitter 100 is coupled, as shown, to optical transmission path 170 and optical receiver 175 to form optical transmission system 190. Optical transmission system 190 may be, for example, a unidirectional system, as shown, or a bidirectional system utilizing additional optical transmitters and receivers (not shown) to facilitate communications in a reverse direction. Optical transmission paths and optical receivers are known. Optical receiver 175 is coupled to bit-error rate detector 178 which detects the rate of bit-errors in the received optical signal. Bit-error rate detectors are known. The functions of bit-error rate detector may optionally be incorporated directly into optical receiver 175. The bit-error rate is used to determine the optical signal-to-noise ratio, Q-factor, or other known figures-of-merit which provide an indication of overall performance of transmission system 190, or, performance of one or more selected optical channels. In this illustrative example, a Q-factor representing average of the N optical channels is used as the performance indicator. Q-factor is described, for example, by Neal S. Bergano, F.W. Kerfoot, C.R. Davidson, "Margin Measurements in Optical Amplifier Systems," IEEE Photonics Technology Letters, Vol. 5, No. 3, March 1993, pp. 304-306. A signal representing the Q-factor is sent back to controller 130 in optical transmitter 100 via telemetry path 185. Telemetry path may be a separate path, or be part of optical transmission path 170 using, for example, overhead bits in data or signal frames such as a SONET frame traveling in the reverse direction. If a separate path is desired, then an order-wire channel or separate channel such as a telephone line may be utilized, for example. The Q-factor received by controller 130 in optical transmitter 100 is used, in accordance with the invention, to dynamically control adjustable birefringence element 122 and polarization controller 129. This dynamic control scheme is discussed below.

In optical transmitter 100, the plurality of optical sources 101-1, 101-2, ... 101-N, which may be, for example, wavelength-tunable semiconductor lasers, are utilized to generate a plurality of continuous-wave optical signals each having a different wavelength, $\lambda_1$, $\lambda_2$, ...$\lambda_N$, respectively, as shown, thus defining a plurality of N optical channels 102-1, 102-2 ... 102-N. Optical sources 101 may be adapted such that optical channels 102 have substantially identical optical power. One or more of the optical sources 101 may be adapted so that optical channels 102 carry information supplied by data sources (not shown) using conventional techniques. The optical channels 102 generated by optical sources 101 pass through polarization controllers 106, and are received by Nx1 multiplexer 115. Polarization controllers 106 are used to orient the state-of-polarization ("SOP") of each optical channel 102 so that they all have substantially the same SOP. Those skilled in the art will recognize that the common SOPs may be represented as a single point on the Poincaré sphere. The Poincaré sphere is well known, being described, for example, by William A. Shurcliff, Polarized Light: Production and Use, Harvard University Press, 1962. Nx1 multiplexer 115 could be, for example, an directional optical coupler that is known in the art. The output of Nx1 multiplexer is a wavelength division multiplexed optical signal 110 having N channels, where each channel is defined by a different wavelength $\lambda_1$, $\lambda_2$, ...$\lambda_N$. For discussion purposes, the channels may be sequentially numbered 1, 2, ... N, from lowest to highest wavelength. In this illustrative example of the invention, for reasons that are discussed below, the channel wavelengths are uniformly spaced, for example, by 1 nm. However, in other applications of the invention it may be desirable to utilize nonuniform channel wavelength spacing. For example, it is known that non-uniform channel wavelength spacing can help reduce the effects of four-wave mixing.

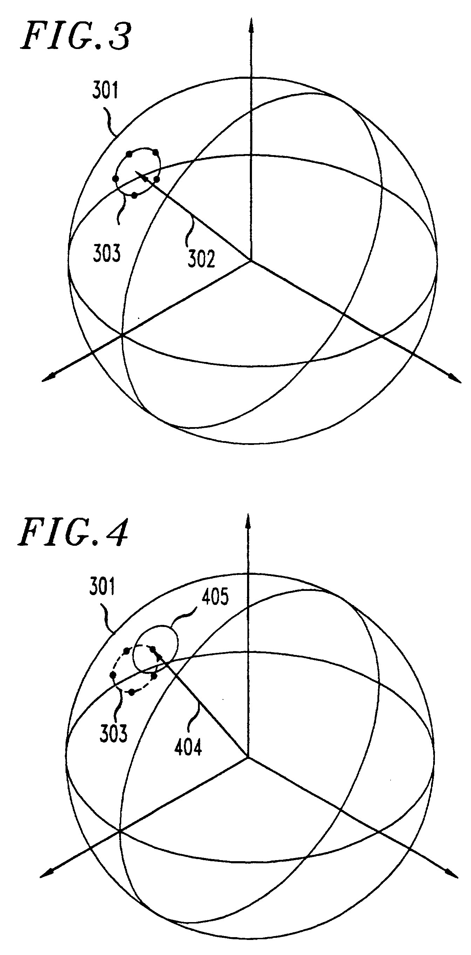

Wavelength division multiplexed optical signal 110 passes from Nx1 multiplexer 115 to polarization modulator 119 after passing through polarization controller 117 and polarizing filter 112. Polarization modulator 119 operates to continuously modulate the SOP of wavelength division multiplexed optical signal 110 so that no one polarization state is preferred during a time interval corresponding to one modulation cycle of polarization modulator 119. Thus, the polarization-modulated wavelength division multiplexed optical signal 120 output from polarization modulator 119 is essentially unpolarized, that is, the average value of its SOP over the modulation time interval is substantially equal to zero. Advantageously, such polarization modulation may significantly reduce the negative effects of polarization-dependent hole burning. In one modulation cycle, polarization modulator 119 may modulate the SOP of wavelength division multiplexed optical signal 110 so that it traces a complete great circle on the Poincaré sphere. Alternatively, the SOP may reciprocate about the trajectory on the Poincaré sphere without tracing a complete great circle. Regardless of the particular trajectory chosen, it is important that the average value of the SOP over the modulation cycle be substantially equal to zero. Polarization modulators are known, and are often called polarization "scramblers." In this illustrative example, it is intended that polarization modulator 119 be of a type that is disclosed in United States patent 5,327,511 (see, particularly figure 3 of that patent), the disclosure of which is incorporated by reference herein. Those skilled in the art will appreciate that polarization modulator 119 in this illustrative example is a polarization-dependent device, as are other known polarization modulators. Therefore, it may be desirable in some applications of the invention to utilize a strongly polarized input signal to polarization modulator 115. Accordingly, FIG. 1 shows polarizing filter 112 disposed at the input to polarization modulator 115. Polarizing filters are known. Polarization controller 117 is utilized to orient the SOP of the wavelength division multiplexed signal 110 to maximize the signal power transmitted to polarizing filter 112. It should be noted that polarizing filter 112 and polarization controller 117 are not required to facilitate the practice of the invention and, thus, should be considered optional. Alternatively, the functions of polarizing filter 112 may be incorporated directly into polarization modulator 119.

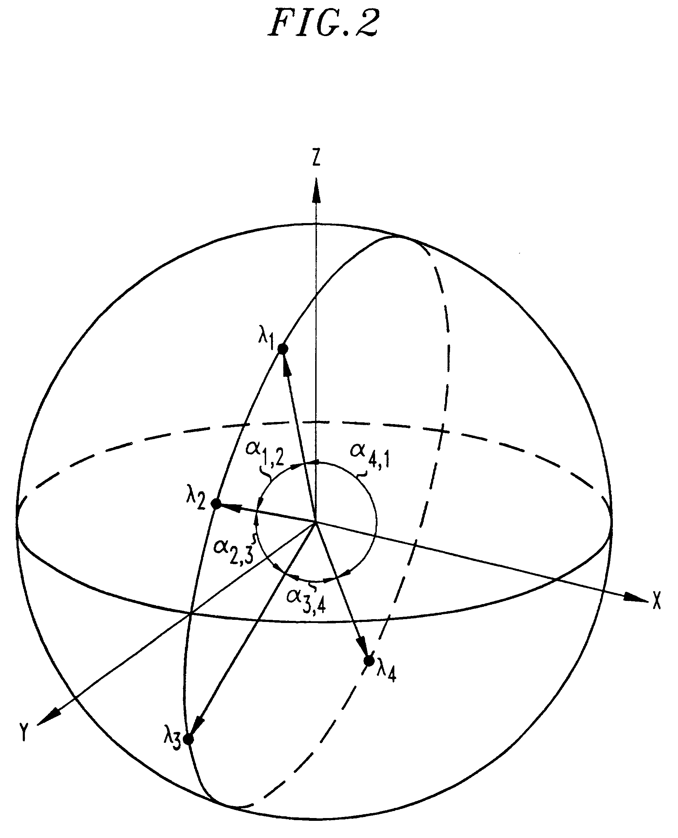

The polarization modulated wavelength division multiplexed optical signal 120 output from polarization modulator 119 is passed to adjustable birefringence element 122 via polarization controller 121. Polarization controllers and adjustable birefringence elements are known. Polarization controller 121 may be, for example, the Lefevre-type polarization controller described by H. C. Lefevre in IEEE Electronics Letters, Vol. 16, p. 778, 1980. Adjustable birefringence device 122 is selected to have an adjustable propagation delay difference between it fast and slow axes thereby allowing a variable amount of birefringence to be selected. Adjustable birefringence elements are known. Adjustable birefringence element 122 could be, for example, a Babinet-Soleil compensator. Polarization controller 121 is utilized to place the great circle polarization modulation trajectory of the polarization-modulated wavelength multiplexed optical signal 120 into a plane which is perpendicular to a line on the Poincaré sphere which joins the fast and slows axes of adjustable birefringence element 122. Adjustable birefringence element 122, in accordance with the invention, advantageously allows the SOPs of the optical channels in the polarization modulated wavelength division multiplexed optical signal 120 to be varied relative to each other according to the amount of birefringence selected. FIG. 2 shows the manner in which SOPs for the optical channels in the polarization modulated wavelength division multiplexed optical signal 123 emerging from adjustable birefringence element are separated along a great circle trajectory on the Poincaré sphere. For purposes of clarity in exposition but not as a limitation on the invention, only SOPs for four exemplary optical channels are illustrated, that is N=4 in FIG. 2. The separation of SOPs of the optical channels in the polarization modulated wavelength division multiplexed optical signal 120 is conveniently described by a separation angle $\alpha_{i,j}$, where the $i$ and $j$ subscripts identify optical channels having neighboring wavelengths. Adjustable birefringence element 122 dynamically adjusts the total birefringence, and hence the separation angles $\alpha_{i,j}$, in response to control signal 132 from controller 130. Those skilled in the art will recognize that separation angles $\alpha_{i,j}$ in this illustrative example are uniform, that is, $\alpha_{1,2} = \alpha_{2,3} = \alpha_{N-1,N}$, due to the above-described uniform channel wavelength spacing. It may be desirable in some applications to select separation angles $\alpha_{i,j}$ to be, for example, approximately 180°, so that odd and even-numbered optical signals have initial SOPs that are substantially orthogonal at the launch state. Alternatively, separation angles $\alpha_{i,j}$ may be non-uniform if non-uniform optical channel wavelength spacing is utilized. It may also be desirable to utilize a combination of uniform and non-uniform separation angles $\alpha_{i,j}$ in some applications of the invention. In this illustrative example, regardless of the values selected, it is emphasized that the average separation angle $\bar{\alpha}_{i,j}$ is dynamically adjusted to maximize the Q-factor as measured at optical receiver 175 for the plurality of N different optical channels. Accordingly, the actual separation angles $\alpha_{i,j}$ at a given instant in time may vary from the initially selected values. Those skilled in the art will recognize that four-wave mixing products that can be generated in optical transmission system 190 are advantageously reduced by the above-described dynamic control of separation angles $\alpha_{i,j}$. Referring back to FIG. 1, the polarization modulated wavelength division multiplexed optical signal 123 emerging from adjustable birefringence element 122 is received by polarization controller 129 which operates to set the launch orientation of the SOP of polarization modulated wavelength division multiplexed optical signal 123 into optical transmission path 170. Polarization controller 129 dynamically adjusts the launch SOP in response to control signal 134 from controller 130 to further maximize the Q-factor at optical receiver 175 as measured by bit-error rate detector 178. In accordance with the principles of the invention, in addition to the advantageous dynamically control of SOP separation and launch orientation, all the optical channels are simultaneously moving about a great circle polarization trajectory, as discussed above, such that the substantially zero average value of the SOP of the wavelength division multiplexed optical signal 123 is maintained. Thus, in accordance with the principles of the invention, the effects of polarization-dependent hole burning and four-wave mixing are simultaneously and significantly reduced in optical transmission systems. Advantageously, this performance improvement is realized even as changing environmental conditions and other factors affect polarization-dependent hole burning and four-wave mixing in optical transmission system 190.

In this illustrative example, controller 130 dynamically controls two parameters -- the average separation angle $\bar{\alpha}_{i,j}$ and launch SOP -- in order to maximize the Q-factor at optical receiver 175 as measured by bit-error rate detector 178. It is emphasized, however, that dynamic control of just one or the other parameter is intended to fall within the scope of the present invention as defined by the claims. The control technique used by controller 130 may be, for example, a simple cause and effect scheme which sequentially adjusts separation angles $\alpha_{i,j}$ and launch SOP in small steps until a measured Q-factor maxima is obtained. Alternatively, a dithering technique may be employed where these parameters are varied in positive and negative amounts around a starting point, and the resulting Q-factor is measured by bit-error rate detector 178. The final position for the parameter is the one which maximizes the measured Q-factor. Those skilled in the art will appreciate that such a dithering technique must take into account two degrees of freedom since the SOP of a signal is a vector quantity. FIGs. 3 and 4 schematically show an example of a dithering technique using the Poincaré sphere. In FIG. 3, the starting SOP is represented by vector 302. The dither trajectory 303 is drawn around the starting SOP as a circle on the Poincaré sphere, with the endpoint of vector 302 as its center. Polarization controller 129 is adjusted such that the SOP precesses about the circular dither trajectory. At a predetermined number of equidistant points from dither trajectory 303, the Q-factor of the received signal is measured. The initial condition vector 302 is then replaced with vector 404, as shown in FIG. 4, which represents the SOP on the dither trajectory 303 resulting in the best Q-factor. A new circular dither trajectory 405 is then drawn using the endpoint of vector 404 as its center, and the process above is repeated.

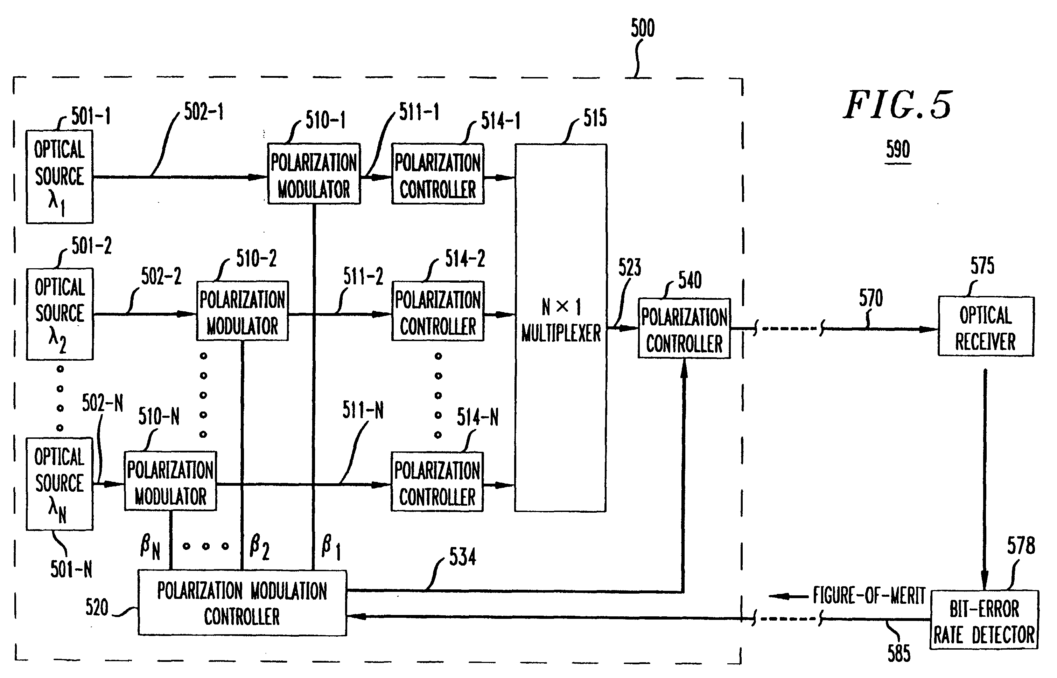

FIG. 5 shows a simplified block diagram of a second illustrative arrangement of elements, in accordance with the invention. Shown are optical transmitter 500; optical transmission path 570; optical receiver 575; bit-error rate detector 578; and telemetry path 585. Optical transmission path 570, optical receiver 575, bit-error rate detector 578, and telemetry path 585 are similar in form and operation to those corresponding elements shown in FIG. 1. Optical transmitter 500 includes a plurality of optical sources 501 for producing a plurality of continuous-wave optical channels 502; a plurality of polarization modulators 510; a plurality of polarization controllers 514 and 540; Nx1 multiplexer 515; and, polarization modulation controller 520. These elements may be coupled using conventional means including, for example, optical fibers, which could include polarization maintaining optical fibers where appropriate. Optical transmitter 500 is coupled, as shown, to optical transmission path 570 and optical receiver 575 to form optical transmission system 590. In this illustrative example, as with the previous illustrative example, polarization modulation controller 520 dynamically controls the polarization modulation of optical channels 502 in response to a signal representing the Q-factor, as with the previous illustrative example, from bit-error rate detector 578 on telemetry path 585. Polarization modulation controller may also optionally dynamically control polarization modulator 540, as shown.

The plurality of optical sources 501-1, 502-2, ... 501-N generate a plurality of optical signals each having a different wavelength, $\lambda_1$, $\lambda_2$, ...$\lambda_N$, respectively, as shown, thus defining a plurality of N optical channels 502-1, 502-2, ... 502-N. Optical sources 501 may be adapted such that optical channels 502 have substantially identical optical power. In this illustrative example, each optical channel 502 passes through individual polarization modulators 510 and individual polarization controllers 514. Polarization modulators 510-1, 510-2, ... 510-N modulate the SOPs of optical channels 502-1, 502-2, ... 502-N, respectively, in response to polarization modulation control signals $\beta_1$, $\beta_2$ ... $\beta_N$, respectively, generated by polarization modulation controller 520. The polarization modulation control signals $\beta_1$, $\beta_2$ ... $\beta_N$ may be, for example, sinusoidal signals described by:

$$\beta_1(t) = A_1 e^{\omega_1 t + \delta_1} \qquad i = 1,2,...N \qquad (1)$$

where $\omega$ is the polarization modulation frequency and $\delta$ is the relative phase. In this illustrative example, $\omega$ is constant, that is $\omega1 = \omega2 = \omega N = \omega$, while $\delta$ and A may be variable. For example, the amplitude $A$ may be adjusted such that the average values of SOPs of the optical channels are substantially equal to zero.. In a similar manner as in FIG. 1, polarization modulators 510 operate to continuously modulate the SOP optical channels 502 so that no one polarization state is preferred during a time interval corresponding to one modulation cycle of polarization modulators 510. Thus, each of the optical channels 502 output from polarization modulators 510 is essentially unpolarized, that is, the average value of the SOPs over the modulation time interval is substantially equal to zero. Moreover, this results in the wavelength division multiplexed optical signal 523 emerging from Nx1 multiplexer 515 having an SOP with a substantially zero average value as well. In one modulation cycle, each polarization modulator 510 may modulate the SOP of an optical channel 502 so that it traces a complete great circle on the Poincaré sphere. Alternatively, the SOP may reciprocate about the trajectory on the Poincaré sphere without tracing a complete great circle. Again, regardless of the particular trajectory chosen, it is important that the average value of the SOP of optical channels 502 over the modulation cycle be substantially equal to zero. The polarization modulated optical channels 511 emerging from polarization modulators 510 are received by Nx 1 multiplexer 515 where they are combined into a single wavelength division multiplexed optical signal 523.

The polarization modulation described above results in the average value of the SOP of each optical channel 502 being substantially equal to zero over each modulation cycle. Therefore, the average value of the SOP of wavelength division multiplexed optical signal 523 is also substantially equal to zero over each modulation cycle. By selectively varying the relative phase, $\delta_i$, of the modulation frequency drive signals $\beta_i$ in equation (1) under the control of polarization modulation controller 520, and by adjusting polarization controllers 514, all of the SOPs of the polarization-modulated optical channels 511 are separated along some particular great circle trajectory on the Poincaré sphere in a similar arrangement as shown in FIG. 2. In some applications of the invention, it may be desirable to select the particular great circle to be the same great circle as utilized by polarization modulators 510. Alternatively, the SOPs may be independent, that is they do not share the same great circle on the Poincaré sphere. Those skilled in the art will recognize that polarization controllers 514 are utilized in this illustrative example of the invention to orient the SOPs of optical channels 511 emerging from polarization modulators 510 into the same great circle trajectory. As with the previous illustrative example, the separation between SOPs of optical signals having neighboring wavelengths, is conveniently described by separation angle $\alpha_{i,j}$ on the Poincaré sphere as shown in FIG. 2. In accordance with the principles of the invention, polarization modulators 510 dynamically adjust the relative phase of the modulation frequency drive signals, $\delta_i$, and hence the separation angles $\alpha_{i,j}$, in response to the modulation frequency drive signals $\beta_i$ from polarization modulation controller 520. The initial separation angles $\alpha_{i,j}$ may be, for example, approximately 180°, such that SOPs of odd-numbered channels are substantially orthogonal to even-numbered channels. Again, it is emphasized that regardless of the initial values selected, the separation angles $\alpha_{i,j}$ are dynamically adjusted to maximize the Q-factor as measured at optical receiver 575. Accordingly, the actual separation angles $\alpha_{i,j}$ at a given instant in time will likely vary from the initially selected values. As with the previous illustrative example, in addition to the above-described separation of SOPs of the optical channels, all the optical channels are simultaneously moving a great circle polarization modulation trajectory, as discussed above, such that substantially zero average value of the SOPs the wavelength division multiplexed optical signal 523 is maintained. Polarization controller 540 is utilized at the output of Nx1 multiplexer 515 to set the launch orientation of the SOP of the wavelength division multiplexed output signal into optical transmission path 585. It is noted that polarization controller 540 is optional as it merely provides additional flexibility in polarization control. This is so because it is evident that the launch orientation of the wavelength division multiplexed output signal may also be set using polarization controllers 514 by themselves. Polarization controller 540 may set the launch SOP orientatic.. in response to control signal 534 from polarization modulation controller 520. Polarization modulation controller 520 may control the separation angles $\alpha_{i,j}$ and launch SOP using the sequential cause and effect scheme or the dithering technique described above when referring to FIGs. 3 and 4.

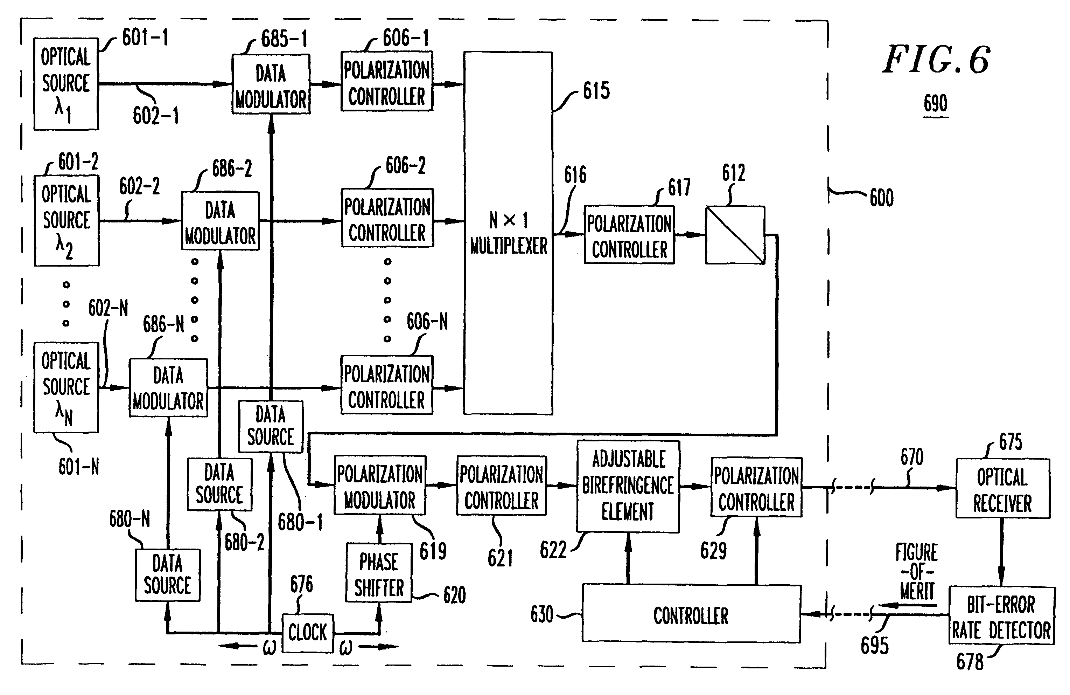

FIG. 6 is a simplified block diagram of a third illustrative arrangement of elements, in accordance with the invention. Shown are optical transmitter 600; optical transmission path 670; optical receiver 675; bit-error rate detector 678; and telemetry path 695. Optical transmission path 670, optical receiver 675, bit-error rate detector 678, and telemetry path 695 are similar in form and operation as those corresponding elements shown in FIG. 1. Optical transmitter 600 is coupled, as shown, to an optical transmission path 670 and optical receiver 675 to form an optical transmission system 690. Optical transmitter 600 includes a plurality of data sources 680, a plurality of data modulators 685; a plurality of optical sources 601 for producing a plurality of optical channels 602; a plurality of polarization controllers 606, 617, 621, and 629; Nx1 multiplexer 615; polarizing filter 612; polarization modulator 619; clock 676; phase shifter 620; controller 630; and, adjustable birefringence element 622. It is noted that the elements forming optical transmitter 600 are similar in form, arrangement, and operation to those shown in FIG. 1, with the additions of data sources 680, data modulators 685, phase shifter 620 and clock 676. These additional elements are utilized to synchronize data and polarization modulation, as discussed below, which may be advantageous in certain applications of the invention. Additional discussion of data and polarization modulation synchronization may be found in my co-pending European patent publication number EP0704996.

Data modulators 685 receive data to be imparted to the optical channels 602 from data sources 680 and modulate the optical channels 602 at a frequency determined by clock 676. In accordance with the principles of the invention, clock 676 also drives polarization modulator 619 via a variable delay line, for example, phase shifter 620 as shown, so that the SOP of the wavelength division optical signal 616 emerging from Nx1 multiplexer 615 is polarization modulated at a rate equal to the rate at which data is imparted to the optical channels 602. Thus, clock 676 causes the rate of polarization modulation to be frequency and phase locked to the rate of data modulation. While phase shifter 620 is shown in FIG. 6, it contemplated that any variable-delay line may be used. Those skilled in the art will recognize that phase shifter 620 is utilized to adjust the relative timing between the polarization and data modulation. Alternatively, this relative timing adjustment may also be implemented using a plurality of variable delay lines, where one delay line is disposed between each data modulator 685 and Nx1 multiplexer 615 either upstream or downstream of polarization controllers 606. A plurality of variable delay lines may also be utilized between clock 676 and data modulators 685, either upstream or downstream of data sources 680. As the above alteratives show, the relative timing adjustment between polarization and phase modulation may be effectuated, in accordance with the invention, by introducing delay on the plurality of optical channels, or by introducing delay on the wavelength division multiplexed optical signal, or by utilizing combinations thereof. It is noted that the scope of the invention is intended to include the performance of synchronous data and polarization modulation on all optical channels, or selected optical channels.

Such synchronous polarization and data modulation advantageously provides for a wavelength division multiplexed transmitter having a near optimal balance between low speed and high speed polarization modulation which minimizes the deleterious effects of AM modulation caused by low speed modulation and increased bandwidth caused by high speed modulation.

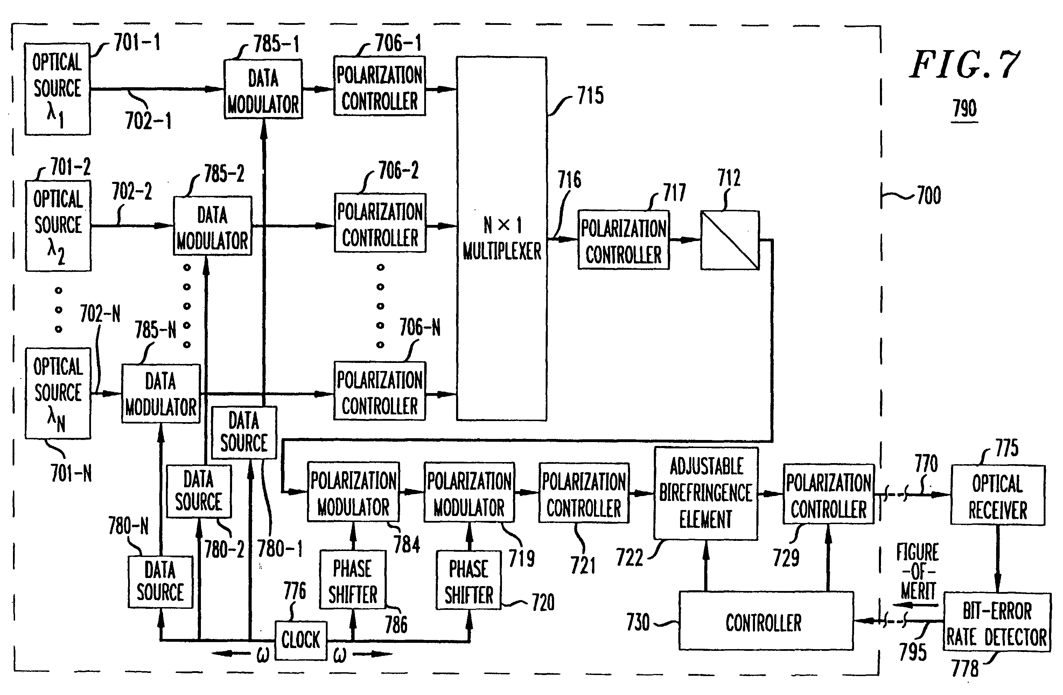

FIG. 7 is a simplified block diagram of a fourth illustrative arrangement of elements, in accordance with the invention. Shown are optical transmitter 700; optical transmission path 770; optical receiver 775; bit-error rate detector 778; and telemetry path 795. Optical transmitter 700 includes a plurality of data sources 780, a plurality of data modulators 785; a plurality of optical sources 701 for producing a plurality of optical channels 702; a plurality of polarization controllers 706, 717, 721, and 729; Nx1 multiplexer 715; polarizing filter 712; polarization modulator 719; clock 776; phase shifters 720 and 786; optical phase modulator 784; controller 730; and, adjustable birefringence element 722, which are coupled as shown. Optical transmitter is coupled to optical transmission path 770 and optical receiver 775 to form optical transmission system 790. Bit-error rate detector 778 is coupled to optical receiver 775 and transmits a signal representative of a figure-of-merit, such as Q-factor, to controller 730 in optical transmitter 700 via telemetry path 795. It is noted that the elements shown in FIG. 7 are similar in form and operation to those corresponding elements shown in FIG. 6, with the additions of optical phase modulator 784 and a variable delay line, which could be, for example, phase shifter 786 as shown.

In this illustrative example, clock 776 simultaneously drives both polarization modulator 719 and phase modulator 784 via phase shifters 720 and 786, respectively. Optical phase modulator 784 modulates the optical phase of wavelength division multiplexed optical signal 716 without modulating the polarization of the signal. Those skilled in the art will recognize that optical phase modulator 784 can be adapted to impart a fixed amount of phase shift to the wavelength division multiplexed optical signal 716 emerging from Nx1 multiplexer 715. In such a case, phase shifter 786 may be deleted. However, it is preferable in many applications of the invention to selectively vary the amount of phase of the optical modulation using phase shifter 786, as shown. In accordance with the invention, by introducing excess phase modulation, various amplitude errors that adversely effect performance of wavelength division multiplexed transmission systems when using a non-return to zero modulation format can advantageously be reduced. The manner in which clock 776 drives polarization modulator 719 and phase modulator 784, and the operational details of phase shifters 720 and 785 are described in my co-pending European patent publication No. EP0704996.

It is noted that the functions of phase modulator 784 may be incorporated directly into polarization modulator 719, which may be desirable in some applications of the invention, in which case phase modulator 784 may be deleted.

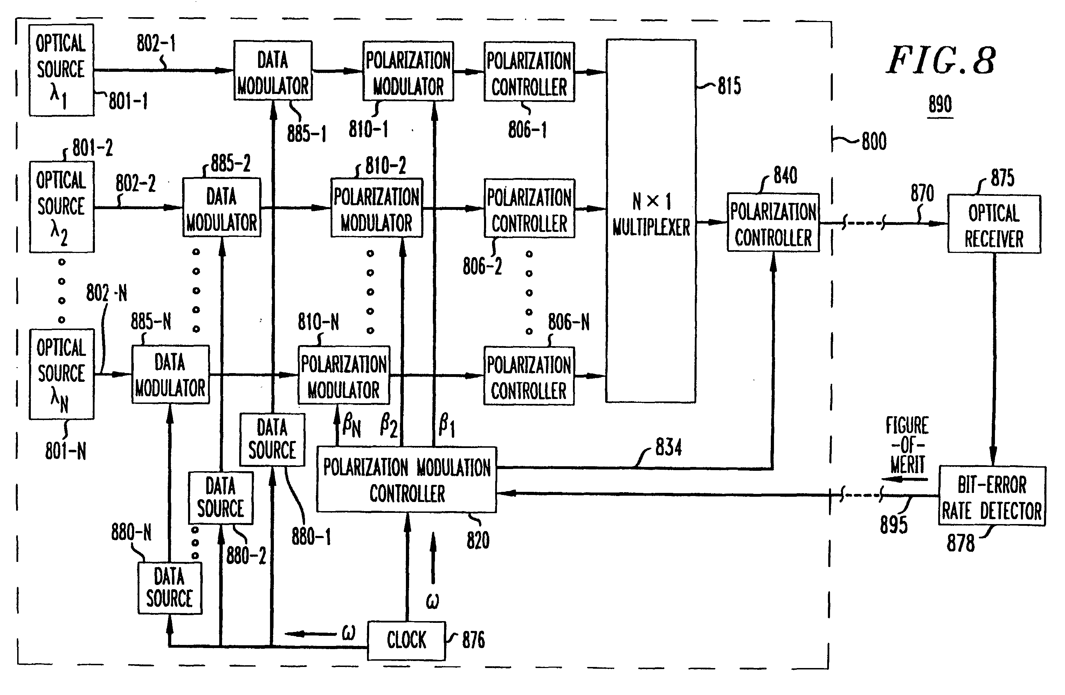

Fig. 8 is a simplified block diagram of a fifth illustrative arrangement of elements, in accordance with the invention. Shown are optical transmitter 800; optical transmission path 870; optical receiver 875; bit-error rate detector 878; and telemetry path 895. Optical transmitter 800 includes a plurality of data sources 880, a plurality of data modulators 885, a plurality of optical sources 801 for producing a plurality of optical channels 802; a plurality of polarization modulators 810; a plurality of polarization controllers 806 and 840; Nx1 multiplexer 815; polarization modulation controller 820; and, clock 876 which are coupled as shown. Optical transmitter 800 is coupled to optical transmission path 870 optical receiver 875 to form optical transmission system 890. Bit-error rate detectors 878 is coupled to optical receiver 875 and transmits a signal representative of a figure-of-merit (Q-factor in this illustrative example) to polarization modulation controller 820 in optical transmitter 800 via telemetry path 895. It is noted that the elements shown in Fig. 8 are similar in form, arrangement, and operation to those shown in FIG. 5 with the addition of data sources 880, data modulators 885, and clock 876 which are utilized to synchronize data and polarization modulation as discussed above when referring to FIG. 6.

Data modulators 885 receive data to be imparted to the optical signals 802 from data sources 880 and modulate the optical channels 802 at a frequency determined by clock 876. In accordance with the principles of the invention, clock 876 also drives polarization modulators 810 so that the SOP of optical channels 802 are polarization modulated at a rate equal to the rate at which data is imparted to the optical channels 802. This synchronous data and polarization modulation is performed in a similar manner as that described when referring to FIG. 6. It will be appreciated by those skilled in the art that the variable delay line, such as a phase shifter, utilized in the previous illustrative example of synchronous data and polarization modulation, is not required in this illustrative example of the invention because phase delay is readily performed by polarization modulators 810 under the control of polarization modulation controller 820. Moreover, the excess phase modulation technique described when referring to FIG. 7 may also be performed by polarization modulators 810 under the control of polarization modulation controller 820, because the relative phase between optical channels 802 may be readily varied as described above when referring to FIG. 6. Alternatively, variably delay lines may also be utilized to introduce a phase adjustment between the data and phase modulation, as in FIG. 6. In such a case, a variable delay line, such as a phase shifter, is disposed between each data modulator 885 and polarization modulator 810, and is coupled to clock 876.

It will be understood that the particular techniques described above are only illustrative of the principles of the present invention, and that various modifications could be made by those skilled in the art without departing from the scope of the present invention, which is limited only by the claims that follow. For example, the wavelengths output by the optical sources, or the amplitude of the output signals, may be controlled.

**Claims**

1. A method of modulating a state-of-polarization of an optical signal for use in an optical transmission system, comprising the steps of:

   modulating the state-of-polarization of said optical signal such that the average value of said state-of-polarization of said optical signal over each modulation cycle is substantially equal to zero;

   **characterised in that** the optical signal has a plurality of optical channels;
   and by orienting states-of-polarization of predetermined optical signal channels of said optical signal in response to a signal indicative of a predetermined performance of said optical transmission system while maintaining said substantially zero average value of said state-of-polarization of said optical signal over each modulation cycle.

2. The method as claimed in claim 1 wherein said predetermined characteristic is the signal-to-noise ratio.

3. The method as claimed in claim 1 wherein said predetermined characteristic is the Q-factor.

4. The method as claimed in claim 1 wherein said plurality of optical channels are wavelength division multiplexed optical channels.

5. The method as claimed in claim 1 wherein said at least one channel of said optical signal and said at least one other channel of said optical signal have substantially identical optical powers.

6. The method as claimed in claim 4 wherein said plurality of wavelength division multiplexed optical channels are produced by a plurality of optical sources.

7. The method as claimed in claim 6 wherein at least one of said optical sources comprises a laser.

8. The method as claimed in claim 7 wherein said laser comprises a wavelength tunable laser.

9. The method as claimed in claim 7 wherein said laser generates a continuous wave optical signal.

10. The method as claimed in claim 4 further including the step of modulating data onto at least one channel of said wavelength division multiplexed optical signal at a predetermined frequency.

11. The method as claimed in claim 10 wherein said modulating said state-of-polarization includes a step of modulating at a frequency that is phase locked and substantially equal to said predetermined frequency so that said state-of-polarization over each modulation cycle is substantially equal to zero.

12. The method as claimed in claim 11 further including a step of selectively varying the phase of the polarization modulation imparted to said optical signal.

**Patentansprüche**

1. Verfahren zur Modulation einer Zustandspolarisation eines optischen Signals zur Verwendung in einem optischen Übertragungssystem, umfassend die Schritte:

   Modulieren der Zustandspolarisation des optischen Signals derart, daß der Durchschnittswert der Zustandspolarisation des optischen Signals über jeden Modulationszyklus im wsentlichen gleich Null ist;

   **dadurch gekennzeichnet, daß** das optische Signal eine Vielzahl optischer Kanäle aufweist;
   und durch Orientieren der Zustandspolarisation vorbestimmter optischer Signalkanäle des optischen Signals als Antwort auf ein indikatives Signal einer vorbestimmten Performance des optischen Übertragungssystems, während der im wesentlichen Null-Durchschnittswert der Zustandspolarisation des optischen Signals über jeden Modulationszyklus aufrechterhalten wird.

2. Verfahren nach Anspruch 1, wobei die vorbestimmte Charakteristik das Störsignalverhältnis ist.

3. Verfahren nach Anspruch 1, wobei die vorbestimmte Charakteristik der Q-Faktor ist.

4. Verfahren nach Anspruch 1, wobei die Vielzahl der optischen Kanäle optische Wellenlängen-Multiplex-Kanäle sind.

5. Verfahren nach Anspruch 1, wobei wenigstens einer der Kanäle des optischen Signals und wenigstens ein anderer Kanal des optischen Signals im wesentlichen identische optische Leistungen aufweisen.

**6.** Verfahren nach Anspruch 4, wobei die Vielzahl der optischen Wellenlängen-Multiplex-Kanäle durch eine Vielzahl optischer Quellen gebildet sind.

**7.** Verfahren nach Anspruch 6, wobei wenigstens eine der optischen Wellen einen Laser umfaßt.

**8.** Verfahren nach Anspuch 7, wobei der Laser einen wellenlängenabstimmbaren Laser umfaßt.

**9.** Verfahren nach Anspruch 7, wobei der Laser ein kontinuierliches optisches Signal erzeugt.

**10.** Verfahren nach Anspruch 4, weiter umfassend den Schritt der Datenmodulation auf wenigstens einem Kanal des optischen Wellenlängen-Multiplex-Signals bei einer vorbestimmten Frequenz.

**11.** Verfahren nach Anspruch 10, wobei die Modulation der Zustandspolarisation den Schritt der Modulation bei einer Frequenz umfaßt, die phasenstarr ist und im wesentlichen gleich zu der vorbestimmten Frequenz ist, so daß die Zustandspolarisation über jeden Modulationszyklus im wesentlichen gleich Null ist.

**12.** Verfahren nach Anspruch 11, weiter umfassend einen Schritt der selektiven Variation der Phase der Polarisationsmodulation, übertragen auf das optische Signal.


## Revendications

**1.** Procédé de modulation d'un état de polarisation d'un signal optique destiné à être utilisé dans un système de transmission optique, comprenant les étapes consistant à :

    moduler l'état de polarisation dudit signal optique tel que la valeur moyenne dudit état de polarisation dudit signal optique sur chaque cycle de modulation est sensiblement égal à zéro ;

    **caractérisé en ce que** le signal optique comprend une pluralité de canaux optiques ;
    et par l'orientation des états de polarisation des canaux de signal optique prédéterminés dudit signal optique en réponse à un signal indicateur d'une performance prédéterminée dudit système de transmission optique tout en maintenant ladite valeur moyenne de sensiblement zéro dudit état de polarisation dudit signal optique sur chaque cycle de modulation.

**2.** Procédé selon la revendication 1, dans lequel ladite caractéristique prédéterminée est le rapport signal/bruit.

**3.** Procédé selon la revendication 1, dans lequel ladite caractéristique prédéterminée est le coefficient de surtension.

**4.** Procédé selon la revendication 1, dans lequel ladite pluralité de canaux optiques sont des canaux optiques multiplexés en longueur d'onde.

**5.** Procédé selon la revendication 1, dans lequel ledit au moins un canal dudit signal optique et ledit au moins un autre canal dudit signal optique présentent des puissances optiques sensiblement identiques.

**6.** Procédé selon la revendication 4, dans lequel ladite pluralité de canaux optiques multiplexés en longueur d'onde est produite par une pluralité de sources optiques.

**7.** Procédé selon la revendication 6, dans lequel au moins une desdites sources optiques comprend un laser.

**8.** Procédé selon la revendication 7, dans lequel ledit laser comprend un laser ajustable par longueur d'onde.

**9.** Procédé selon la revendication 7, dans lequel ledit laser génère un signal optique à onde continue.

**10.** Procédé selon la revendication 4, comprenant en outre l'étape consistant à moduler des données sur au moins un canal dudit signal optique multiplexé en longueur d'onde à une fréquence prédéterminée.

**11.** Procédé selon la revendication 10 dans lequel ladite modulation dudit état de polarisation comprend une étape consistant à moduler à une fréquence qui est verrouillée en phase et sensiblement égale à ladite fréquence prédéterminée de sorte que ledit état de polarisation sur chaque cycle de modulation est sensiblement égal à zéro.

**12.** Procédé selon la revendication 11, comprenant en outre une étape consistant à faire varier de manière sélective la phase de modulation de polarisation communiquée audit signal optique.

FIG.1

190

EP 0 717 523 B1

# FIG.2

*FIG.3*

*FIG.4*

EP 0 717 523 B1

FIG.5

590

500

*FIG.6*

690

EP 0 717 523 B1

FIG.7

790

700

EP 0 717 523 B1

FIG.8

890

800

EP 0 717 523 B1